(19) Europäisches Patentamt
European Patent Office
Office européen des brevets

(11) **EP 3 904 413 A1**

(12) **EUROPEAN PATENT APPLICATION**
published in accordance with Art. 153(4) EPC

(43) Date of publication:
**03.11.2021 Bulletin 2021/44**

(21) Application number: **19903092.5**

(22) Date of filing: **17.10.2019**

(51) Int Cl.:
***C08F 290/04*** *(2006.01)* ***H01M 8/0284*** *(2016.01)*
***H01M 8/10*** *(2016.01)*

(86) International application number:
**PCT/JP2019/040982**

(87) International publication number:
**WO 2020/137111 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2018 JP 2018240570**

(71) Applicant: **ThreeBond Co., Ltd.**
**Tokyo 192-0398 (JP)**

(72) Inventors:
- **KOYAMA, Akihiro**
  **Hachioji-shi, Tokyo 192-0398 (JP)**
- **YAMADA, Koji**
  **Hachioji-shi, Tokyo 192-0398 (JP)**
- **FUKUMOTO, Masayuki**
  **Hachioji-shi, Tokyo 192-0398 (JP)**
- **SOGA,Tetsunori**
  **Hachioji-shi, Tokyo 192-0398 (JP)**

(74) Representative: **Petty, Catrin Helen**
**Venner Shipley LLP**
**200 Aldersgate**
**London EC1A 4HD (GB)**

(54) **CURABLE RESIN COMPOSITION, FUEL CELL, AND SEALING METHOD**

(57) An object of the present invention is to provide a curable resin composition having a low viscosity and capable of obtaining a cured material having excellent compression set. The curable resin composition of the present invention contains the following components (A) to (C):
component (A): an oligomer having one or more (meth)acryloyl groups and a polyisobutylene skeleton containing a $-[CH_2C(CH_3)_2]-$ unit,
component (B): a monofunctional monomer having a (meth)acryloyloxy group and a saturated heterocycle with a 4 or more membered ring,
component (C): a radical polymerization initiator.

[Fig. 1]

FIG.1

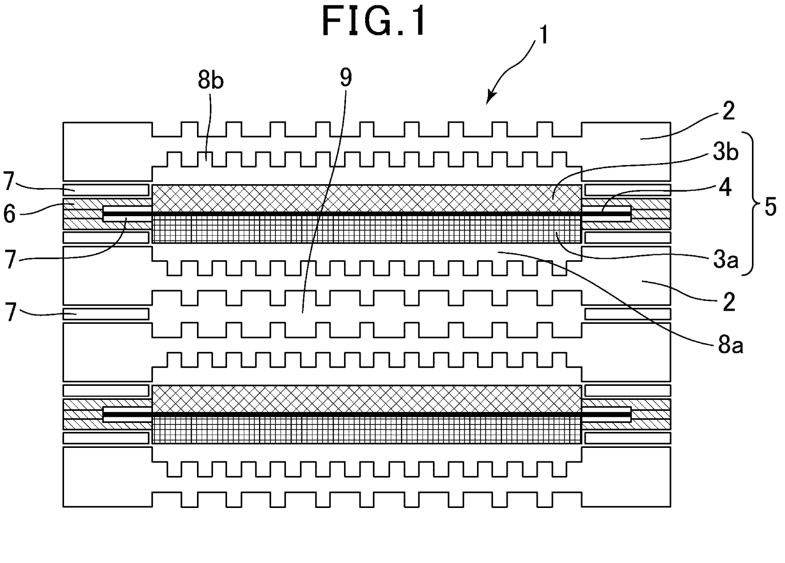


EP 3 904 413 A1

## Description

### TECHNICAL FIELD

The present invention relates to a curable resin composition, a fuel cell, and a sealing method.

### BACKGROUND ART

In recent years, a fuel cell has been attracting attention as a new energy system for automobiles and homes. The fuel cell is a power generation device that extracts electricity by chemically reacting hydrogen and oxygen. In addition, the fuel cell is a clean next-generation power generation device in that it has high energy efficiency during power generation and water is generated by the reaction of hydrogen and oxygen. There are four types of fuel cells: a polymer electrolyte fuel cell, a phosphoric acid fuel cell, a molten carbonate fuel cell, and a solid oxide fuel cell. Among them, since the polymer electrolyte fuel cell has high power generation efficiency even though an operating temperature is relatively low (about 80°C), it is expected to be used as a power source for automobiles, a power generation device for homes, a small power source for electronic devices such as a mobile phone, an emergency power source, and the like.
As illustrated in FIG. 1, a cell 1 of the polymer electrolyte fuel cell has a structure provided with a membrane electrode assembly (MEA) 5 having a polymer electrolyte membrane 4 sandwiched between an air electrode (cathode) 3a and a fuel electrode (anode) 3b, a frame 6 that supports the MEA, and a separator 2 with a gas flow path.
In order to start a polymer electrolyte fuel cell, it is necessary to separately supply a fuel gas containing hydrogen to the fuel electrode and an oxidation gas containing oxygen to the air electrode in an isolation state. This is because if the isolation is insufficient and one gas is mixed with the other gas, power generation efficiency may decrease. From this background, a sealant has been often used for the purpose of preventing leakage of fuel gas, oxidation gas, and the like. Specifically, a sealant has been used between adjacent separators, between a separator and a frame, between a frame and an electrolyte membrane or MEA, and the like.
As a sealant used for the polymer electrolyte fuel cell, from the aspect that a rubber elastic body has excellent gas permeability, low moisture permeability, excellent heat resistance, excellent acid resistance, and excellent flexibility, a thermosetting resin composition that undergoes a hydrosilylation reaction using a polyisobutylene-based polymer (refer to JP 2004-111146 A), a thermosetting resin composition that undergoes a hydrosilylation reaction using a fluoropolyether compound (refer to JP 2004-075824 A (US 2005/0043480 A1)), a thermosetting resin composition that undergoes a hydrosilylation reaction using a fluoropolymer (refer to JP 2007-100099 A), a thermosetting resin composition using ethylenepropylene-diene rubber (refer to JP 2013-229323 A), and a polymer composition using a telequilic polyisobutylene polymer having 2 or 3 terminal acrylate groups (refer to JP H02-88614 (EP 0 353 471 A2)).

### SUMMARY OF INVENTION

Technical Problem

However, since the curable resin composition disclosed in JP 2004-111146 A, JP 2004-075824 A (US 2005/0043480 A1), JP 2007-100099 A, JP 2013-229323 A, and JP H02-88614 A (EP 0 353 471 A2) uses a polyisobutylene-based polymer having a large molecular weight in order to improve sealing property, there is a problem in that viscosity increases and coating workability is inferior. Further, generally, a method of adding a reactive diluent is used in order to reduce viscosity of a curable resin composition, but in this case, there is a problem in that compression set property of a cured material is lowered.
The present invention has been made in view of the above circumstances, and an object of the present invention is to provide a curable resin composition having a low viscosity and capable of obtaining a cured material having excellent compression set.

Solution to Problem

The content of the present invention will be described hereinbelow.
[1] A curable resin composition containing the following components (A) to (C):

Component (A): an oligomer having one or more (meth)acryloyl groups and a polyisobutylene structure having a $-[CH_2C(CH_3)_2]-$ unit;
Component (B): a monofunctional monomer having a (meth)acryloyloxy group and a saturated heterocycle that is a 4 or more membered ring; and
Component (C): a radical polymerization initiator.

[2] The curable resin composition according to [1], wherein the component (A) is an oligomer having a polyisobutylene structure represented by the Formula (1) :

[Chem. 1]

Formula (1):

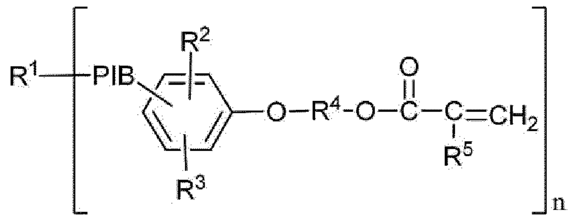

In the Formula (1), $R^1$ represents a monovalent or polyvalent aromatic hydrocarbon group, or a monovalent or polyvalent aliphatic hydrocarbon group; PIB represents the polyisobutylene structure having a - $[CH_2C(CH_3)_2]$- unit; $R^4$ represents a divalent hydrocarbon group having 2 to 6 carbon atoms that may contain an oxygen atom; $R^2$ and $R^3$ independently represent a hydrogen atom or a monovalent hydrocarbon group having 1 to 20 carbon atoms; $R^5$ represents a hydrogen atom, a methyl group, or an ethyl group; and n is an integer from 1 to 6.

[3] The curable resin composition according to [1] or [2], wherein a hetero atom forming the saturated heterocycle of the component (B) is an oxygen atom.

[4] The curable resin composition according to any one of [1] to [3], wherein the component (B) is contained in an amount in the range of 5 to 500 parts by mass with respect to 100 parts by mass of the component (A) .

[5] The curable resin composition according to any one of [1] to [4], wherein the component (B) is at least one selected from the group consisting of (2-methyl-2-ethyl-1,3-dioxolan-4-yl) methyl (meth)acrylate, (3-ethyloxetane-3-yl) methyl (meth)acrylate, cyclic trimethylolpropane formal (meth)acrylate, tetrahydrofurfuryl (meth)acrylate, alkoxylated tetrahydrofurfuryl acrylate, and caprolactone-modified tetrahydrofurfuryl (meth)acrylate.

[6] A curable sealant for a fuel cell, containing the curable resin composition according to any one of [1] to [5].

[7] The curable sealant for a fuel cell according to [6], which is used to seal a periphery of any member selected from the group consisting of a separator, a frame, an electrolyte membrane, a fuel electrode, an air electrode, and a membrane electrode assembly, as a member in a fuel cell.

Use of the curable resin composition according to any one of [1] to [5] for sealing a periphery of any member selected from the group consisting of a separator, a frame, an electrolyte membrane, a fuel electrode, an air electrode, and a membrane electrode assembly, as a member in a fuel cell (particularly a polymer electrolyte fuel cell).

[8] The curable sealant for a fuel cell according to [6] or [7], which is used to seal between adjacent separators in a fuel cell, or between a frame and an electrolyte membrane or membrane electrode assembly in a fuel cell.

Use of the curable resin composition according to any one of [1] to [5] for sealing between adjacent separators in a fuel cell (particularly a polymer electrolyte fuel cell), or between a frame and an electrolyte membrane or membrane electrode assembly in a fuel cell.

[9] The curable sealant for a fuel cell according to any one of [6] to [8], which is a curable sealant for a polymer electrolyte fuel cell.

[10] A cured material obtainable by curing the curable resin composition according to any one of [1] to [5] or the curable sealant for a fuel cell according to any one of [6] to [9].

[11] A fuel cell including one selected from the group consisting of a seal between adjacent separators in a fuel cell and a seal between a frame and an electrolyte membrane or membrane electrode assembly in a fuel cell, wherein any of the above seals is the cured material according to [10].

[12] The fuel cell according to [11], wherein the fuel cell is a polymer electrolyte fuel cell.

[13] A method of sealing at least a portion of a part to be sealed that has at least two flanges between the at least two flanges, wherein at least one of the flanges can transmit light of active energy rays, the method comprising: a step of applying the curable resin composition according to any one of [1] to [5] to a surface of at least one of the flanges; a step of combining one flange to which the curable resin composition is applied and the other flange via the curable resin composition; and a step of irradiating an active energy ray through the flange that can transmit light of active energy rays to cure the curable resin composition and to seal at least a portion between the at least two flanges.

[14] A method of sealing at least a portion of a part to be sealed that has at least two flanges between the at least two flanges, the method comprising: a step of applying the curable resin composition according to any one of [1] to [5] to at least one of the flanges; a step of irradiating the applied curable resin composition with active energy rays to cure the curable resin composition and to form a gasket composed of a cured material of the curable resin composition;

and a step of placing the other flange on the gasket and crimping one flange coated with the curable resin composition and the other flange via the gasket to seal at least a portion between the at least two flanges.

[15] A method of sealing at least a portion of a part to be sealed that has at least two flanges between the at least two flanges, the method comprising: a step of placing a gasket forming mold on at least one of the flanges; a step of injecting the curable resin composition according to any one of [1] to [5] into at least a portion of a gap between the gasket forming mold and the flange on which the mold is placed; a step of irradiating the curable resin composition with active energy rays to cure the curable resin composition and to form a gasket composed of a cured material of the curable resin composition; a step of removing the mold from the one flange; and a step of placing the other flange on the gasket and crimping the one flange and the other flange via the gasket to seal at least a portion between the at least two flanges.

## BRIEF DESCRIPTION OF DRAWINGS

FIG. 1 is a schematic cross-sectional view of a single cell of a fuel cell. In FIG. 1, 1 indicates a cell of a polymer electrolyte fuel cell, 2 indicates a separator, 3a indicates an air electrode (cathode), 3b indicates a fuel electrode (anode), 4 indicates a polymer electrolyte membrane, 5 indicates a membrane electrode assembly (MEA), 6 indicates a frame, 7 indicates an adhesive or sealant, 8a indicates an oxidation gas flow path, 8b indicates a fuel gas flow path, and 9 indicates a cooling water flow path.

FIG. 2 is a schematic view illustrating an entire fuel cell. In FIG. 2, 10 indicates a cell stack, and 11 indicates a polymer electrolyte fuel cell.

## DESCRIPTION OF EMBODIMENTS

A first aspect of the present invention relates to a curable resin composition containing an oligomer having a (meth)acryloyl group and a polyisobutylene skeleton having a $-[CH_2C(CH_3)_2]-$ unit (component (A)); a monofunctional monomer having a (meth)acryloyloxy group and a saturated heterocycle with a 4 or more membered ring (component (B)); and a radical polymerization initiator (component (C)). According to the curable resin composition of the present invention, a cured material having excellent compression set can be obtained while it has a low viscosity. In this specification, "polyisobutylene unit containing a $-[CH_2C(CH_3)_2]-$ unit" is also simply referred to as "polyisobutylene unit".

The details of the invention will be described below.

<Component (A)>

The component (A) used in the present invention is not particularly limited as long as it is an oligomer having one or more (meth)acryloyl groups and a polyisobutylene skeleton containing a $-[CH_2C(CH_3)_2]-$ unit. The component (A) may have a (meth)acryloyl group ($CH_2=CH-C(=O)-$ or $CH_2=C(CH_3)-C(=O)-$) and $-[CH_2C(CH_3)_2]-$unit (polyisobutylene skeleton), and may be an oligomer having "a constituent unit other than $-[CH_2C(CH_3)_2]-$unit", for example. The component (A) may suitably have the $-[CH_2C(CH_3)_2]-$ unit in a content, for example, of 70% by mass or more, preferably of 75% by mass or more, more preferably of 80% by mass or more, with respect to the total amount of the constituent units (component (A)). The component (A) may suitably have the $-[CH_2C(CH_3)_2]-$unit in a content, for example, of less than 100% by mass or less, or in another embodiment, of less than 100% by mass, or in still another embodiment, of 95% by mass or less, and in still another embodiment, of 90% by mass or less, with respect to the total amount of the constituent units (component (A)). Alternatively, the component (A) may suitably have the $-[CH_2C(CH_3)_2]-$ unit in a content, for example, of 80% by mass or more, preferably of 85% by mass or more, more preferably of 90% by mass or more, and still more preferably of more than 95% by mass, with respect to the polyisobutylene skeleton. The component (A) may suitably have the - $[CH_2C(CH_3)_2]-$ unit in a content, for example, of 100% by mass or less, or in another embodiment, of less than 100% by mass, with respect to the polyisobutylene skeleton. The component (A) preferably has 1 to 12 (meth)acryloyl groups, more preferably 2 to 8 (meth)acryloyl groups, still more preferably 2 to 4 (meth)acryloyl groups, and particularly preferably 2 (meth)acryloyl groups. In the present invention, the oligomer, but not limited to the following theory, can be defined as, for example, a compound having a structure having a repeating unit(s) of a monomer(s) as a main chain of the oligomer and consisting of 100 or more repeating units. The number of the $-[CH_2C(CH_3)_2]-$units in one polyisobutylene skeleton (PIB in the following Formula (1)) is, for example, 100 or more, preferably 120 to 300, and more preferably 150 to 250. Further, the (meth)acryloyl group may be present at either a side chain and/or a terminal of a molecule, but it is preferably present at the terminal of the molecule from the viewpoint of excellent compression set.

As the component (A), an oligomer having a polyisobutylene skeleton represented by the following Formula (1) is preferable from the viewpoint of obtaining a cured material having excellent compression set. That is, in a preferable

embodiment of the present invention, the component (A) is an oligomer having a polyisobutylene skeleton represented by the following Formula (1).

Specific examples of the component (A) include polyisobutylene having a (meth)acryloyloxyalkoxyphenyl group. The main skeleton of the component (A) in the present invention is a polyisobutylene skeleton, and as the monomer constituting the polyisobutylene skeleton, in addition to mainly using isobutylene, other monomers may be copolymerized as long as the effects by the present invention are not impaired. The component (A) is preferably liquid at room temperature (25°C) because the curable resin composition is excellent in coating workability.

[Chem. 2]

Formula (1):

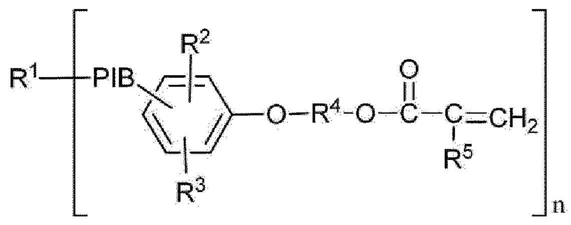

In the Formula (1), $R^1$ represents a monovalent or polyvalent aromatic hydrocarbon group, or a monovalent or polyvalent aliphatic hydrocarbon group. Here, the aromatic hydrocarbon group is not particularly limited, and examples thereof include groups derived from benzene, pentalene, indene, naphthalene, anthracene, azulene, heptalene, asenaphthalene, phenalene, fluorene, anthraquinone, phenanthrene, biphenyl, terphenyl, quarter phenyl, kink phenyl, sexiphenyl, triphenylene, pyrene, chrysene, picene, perylene, pentaphene, pentacene, tetrafen, hexaphene, hexacene, rubicene, trinaphtylene, heptaphen, pyrantren, and the like. Among them, groups derived from benzene, naphthalene, anthracene, and biphenyl are preferable, and a group derived from benzene are more preferable, from the viewpoint of obtaining a cured material having excellent compression set. The aliphatic hydrocarbon group is not particularly limited, and examples thereof include linear or branched alkyl groups having 1 to 12 carbon atoms (for example, methyl group, ethyl group, n-propyl group, isopropyl group, n-butyl group, isobutyl group, sec-butyl group, tert-butyl group, n-pentyl group, isopentyl group, sec-pentyl group, tert-pentyl group, n-hexyl group, isohexyl group, sec-hexyl group, tert-hexyl group, heptyl group, octyl group, 2-ethylhexyl group, nonyl group, decyl group, undecyl group, and dodecyl group), linear or branched alkylene groups having 1 to 12 carbon atoms (for example, methylene group, ethylene group, n-propylene group, isopropylene group, n-butylene group, isobutylene group, sec-butylene group, tert-butylene group, n-pentylene group, isopentylene group, sec-pentylene group, tert-pentylene group, n-hexylene group, isohexylene group, sec-hexylene group, tert-hexylene group, heptylene group, octylene group, 2-ethylhexylene group, nonylene group, decylenic group, undecylenic group, and dodecylenic group), and the like. $R^1$ is a monovalent or polyvalent group, and when the aliphatic hydrocarbon is a trivalent or higher valent group, for example, a group obtained by removing a hydrogen atom from the above-mentioned aliphatic hydrocarbon group can be mentioned. Here, the valence of $R^1$ is not particularly limited, and is preferably 1 to 12, more preferably 2 to 8, still more preferably 2 to 4, and particularly preferably 2, from the viewpoint of obtaining a cured material having excellent compression set. That is, $R^1$ is preferably a polyvalent aromatic hydrocarbon group, more preferably a divalent to tetravalent group derived from benzene, still more preferably a divalent phenylene group (o, m, p-phenylene group) and particularly preferably a divalent p-phenylene group. PIB indicates a polyisobutylene skeleton containing a $-[CH_2C(CH_3)_2]-$ (or consisting of $-[CH_2C(CH_3)_2]-$ unit) . In the former case (that is, PIB includes another unit(s) as well as the $-[CH_2C(CH_3)_2]-$unit), the another unit(s) is not particularly limited, and examples thereof include linear or branched alkylene groups having 1 to 6 carbon atoms such as methylene group, ethylene group, trimethylene group, tetramethylene group, propylene group ($-CH(CH_3)CH_2-$), and isopropylene group ($-C(CH_3)CH_2-$). Among them, PIB is preferably formed of a $-[CH_2C(CH_3)_2]-$ unit or a linear or branched alkylene group having 2 to 6 carbon atoms and a $-[CH_2C(CH_3)_2]-$ unit, more preferably formed of a branched alkylene group having 3 to 5 carbon atoms and a $-[CH_2C(CH_3)_2]-$, and particularly preferably formed of an isopropylene group ($-C(CH_3)_2-$) and $-[CH_2C(CH_3)_2]-$ unit (for example, $[-C(CH_3)_2-[CH_2C(CH_3)_2]-]$ unit or $[-C(CH_3)_2-[C(CH_3)_2CH_2]-]$ unit). $R^4$ represents a divalent hydrocarbon group having 2 to 6 carbon atoms which may contain an oxygen atom. Here, the divalent hydrocarbon group having 2 to 6 carbon atoms is not particularly limited, and groups similar to those in the PIB can be exemplified. Preferably, $R^4$ is a divalent hydrocarbon group having 2 or 3 carbon atoms (for example, ethylene group ($-CH_2-CH_2-$), trimethylene group ($-CH_2-CH_2-CH_2-$), propylene group ($-CH(CH_3)CH_2-$), isopropylene group ($-C(CH_3)_2-$), and the like), and is particularly preferably ethylene group. When $R^4$ contains an oxygen atom, a position of the oxygen atom is not particularly limited. For example, an oxygen atom is incorporated at at least one end of the alkylene group or between adjacent

carbon atoms constituting the alkylene group, or one or more hydrogen atoms constituting the alkylene group are substituted with an oxygen atom. Among them, ethylene oxide group and propylene oxide group are preferable from the viewpoint of obtaining a cured material having excellent compression set. $R^2$ and $R^3$ each independently represent a hydrogen atom or a monovalent hydrocarbon group having 1 to 20 carbon atoms. Here, $R^2$ and $R^3$ may be the same as or different from each other. The monovalent hydrocarbon group having 1 to 20 carbon atoms is not particularly limited, and examples thereof include linear or branched alkyl groups such as methyl group, ethyl group, n-propyl group, isopropyl group, n-butyl group, isobutyl group, sec-butyl group, tert-butyl group, n-pentyl group, isopentyl, neopentyl, n-hexyl group, cyclohexyl group, n-heptyl group, n-octyl group, 2-ethylhexyl group, n-nonyl group, n-decyl group, n-undecyl group, n-dodecyl group, n-tridecylic group, n-tetradecyl group, 2-tetraoctyl group, n-pentadecyl group, n-hexadecyl group, 2-hexyldecyl group, n-heptadecyl group, 1-octylnonyl group, n-octadecyl group, n-nonadecyl group, n-icosyl group, and the like; and cyclic alkyl groups such as cyclohexyl group and cyclooctyl group. Among them, $R^2$ and $R^3$ are preferably a hydrogen atom, a linear or branched alkyl groups having 1 to 8 carbon atom, and more preferably a hydrogen atom, a linear or branched alkyl group having 1 to 3 carbon atoms, and particularly preferably a hydrogen atom. $R^5$ represents a hydrogen atom, a methyl group, or an ethyl group, and is preferably a hydrogen atom or a methyl group. n is an integer of 1 to 6, more preferably an integer of 2 to 4, and particularly preferably 2.

A molecular weight of the component (A) is not particularly limited, and a number average molecular weight by chromatographic measurement is preferably, for example, 200 to 500,000, more preferably 500 to 300,000, still more preferably 1,000 to 200,000, even more preferably 1,000 to 100,000, and particularly preferably 3,000 to 50,000, from the viewpoint of obtaining a cured material having excellent compression set. The number average molecular weight is calculated by a standard polystyrene conversion method using size permeation chromatography (SEC).

A viscosity of the component (A) at 25°C is not particularly limited, and is, for example, 5 Pa·s or more, preferably 50 Pa·s or more, and more preferably 100 Pa·s or more, and for example, 3000 Pa·s or less, preferably 2500 Pa·s or less, more preferably 2000 Pa·s or less, from the viewpoint of workability or the like. A particularly preferable viscosity is 1550 Pa·s or less. Unless otherwise specified, the viscosity is measured at 25°C using a cone plate type viscometer.

The component (A) may be used alone or two or more types thereof may be used in combination.

A method of producing the component (A) is not particularly limited, and a known method can be used. Examples thereof include, for example, a method which comprises reacting terminal hydroxyl group polyisobutylene with acryloyl chloride or methacryloyl chloride disclosed in Polymer Bulletin, Vol. 6, pp. 135-141 (1981), T.P. Liao and J.P. Kennedy and Polymer Bulletin, Vol. 20, pp. 253-260 (1988), Puskas et al. In addition, examples of another method of producing the component (A) include a method which comprises reacting terminal hydroxyl group polyisobutylene with a compound having a (meth)acryloyl group and an isocyanate group, a method which comprises reacting terminal hydroxyl group polyisobutylene with a compound having an isocyanate group and a compound having a (meth)acryloyl group and a hydroxyl group, a method which comprises reacting terminal hydroxyl group polyisobutylene with (meth)acrylic acid or (meth)acrylic acid lower ester using a dehydration esterification process or a transesterification process, and the like.

Further, a method of producing an oligomer having a polyisobutylene skeleton represented by the Formula (1) is not particularly limited, and is preferably, a method which comprises reacting halogen-terminated polyisobutylene with a compound having a (meth)acryloyl group and a phenoxy group as represented by the Formula (2) as disclosed in JP 2013-216782 A. The halogen-terminated polyisobutylene can be obtained by a known method, for example, by cationic polymerization, and more preferably by living cationic polymerization.

[Chem. 3]

Formula (2):

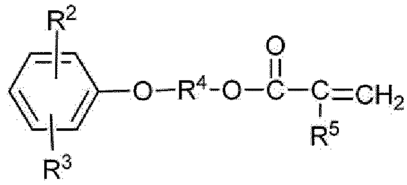

In the Formula (2), $R^2$, $R^3$, $R^4$, and $R^5$ may be as defined in the Formula (1). Specifically, $R^4$ represents a divalent hydrocarbon group having 2 to 6 carbon atoms that may contain an oxygen atom. $R^2$ and $R^3$ each independently represent a hydrogen atom or a monovalent hydrocarbon group having 1 to 20 carbon atoms. $R^5$ represents a hydrogen atom, a methyl group, and an ethyl group. Since it is preferable that $R^2$, $R^3$, $R^4$, and $R^5$ in the Formula (2) have the same definitions as those in the Formula (1), description thereof will be omitted here. Examples of the compound represented by the Formula (2) include phenoxymethyl (meth)acrylate, phenoxyethyl (meth)acrylate, phenoxypropyl (meth)acrylate, phenoxybutyl (meth)acrylate, phenoxypentyl (meth)acrylate, and the like, and phenoxyethyl (meth)acrylate, phenoxypropyl (meth)acrylate, phenoxybutyl (meth)acrylate, phenoxypentyl (meth)acrylate, and the like are preferable.

<Component (B)>

The component (B) of the present invention is a monofunctional monomer having one (meth)acryloyloxy group ($CH_2$=CH-C(=O)-O- or $CH_2$=C($CH_3$)-C(=O)-O-) and a saturated heterocycle with a 4 or more membered ring. The component (B) of the present invention can provide a curable resin composition capable of obtaining a cured material having excellent compression set while showing a low viscosity, by combining with the other components of the present invention. Examples of the hetero atom constituting the heterocycle include an oxygen atom, a nitrogen atom, a sulfur atom, and the like. The component (B) may have one or two or more hetero atoms. Further, the component (B) may have one or two or more different hetero atoms of two or more kinds. Since a curable resin composition capable of obtaining a cured material having excellent compression set while showing a low viscosity can be obtained, it is particularly preferable to contain an oxygen atom(s) . That is, in the preferable embodiment of the present invention, the hetero atom constituting the heterocycle of the component (B) is an oxygen atom.

Specifically, examples of the saturated heterocycle with a 4 or more membered ring include, but not limited thereto, an oxetane ring, a tetrahydrofuran ring, a tetrahydropyran ring, an oxepane ring, a dioxolane ring, a dioxane ring, a pyrrolidine ring, a piperidine ring, a piperazine ring, a morpholine ring, and the like. Among them, in view of obtaining a curable resin composition capable of providing the cured material having excellent compression set while showing a low viscosity, the saturated heterocycle with a 4 or more membered ring is preferably a dioxolane ring, an oxetane ring, or a tetrahydrofuran ring, and more preferably a tetrahydrofuran ring.

More specifically, the component (B) is not particularly limited. Examples thereof may include (2-methyl-2-ethyl-1,3-dioxolane-4-yl) methyl (meth)acrylate, (3-ethyloxetane-3-yl) methyl (meth)acrylate, cyclic trimethylolpropane formal (meth)acrylate, tetrahydrofurfuryl (meth)acrylate, alkoxyated tetrahydrofurfuryl acrylate, caprolactone-modified tetrahydrofurfuryl (meth)acrylate, and the like. Among them, (3-ethyloxetane-3-yl) methyl (meth)acrylate, tetrahydrofurfuryl (meth)acrylate, alkoxylated tetrahydrofurfuryl acrylate, caprolactone-modified tetrahydrofurfuryl (meth)acrylate are preferable, and (3-ethyloxetane-3-yl) methyl (meth)acrylate and tetrahydrofurfuryl (meth)acrylate are particularly preferable. Further, these may be used alone or two or more types thereof may be used in combination. That is, in the preferable embodiment of the present invention, the component (B) is at least one selected from the group consisting of (2-methyl-2-ethyl-1,3-dioxolan-4-yl) methyl (meth)acrylate, (3-ethyloxetane-3-yl) methyl (meth)acrylate, cyclic trimethylolpropane formal (meth)acrylate, tetrahydrofurfuryl (meth)acrylate, alkoxylated tetrahydrofurfuryl acrylate, and caprolactone-modified tetrahydrofurfuryl (meth)acrylate. In a more preferable embodiment of the invention, the component (B) is at least one selected from the group consisting of (3-ethyloxetane-3-yl) methyl (meth)acrylate, tetrahydrofurfuryl (meth)acrylate, alkoxylated tetrahydrofurfuryl acrylate, and caprolactone-modified tetrahydrofurfuryl (meth)acrylate. In a particularly preferable embodiment of the invention, the component (B) is at least one selected from the group consisting of (3-ethyloxetane-3-yl) methyl (meth)acrylate and tetrahydrofurfuryl (meth)acrylate.

The commercially available product of the component (B) is not particularly limited, and examples thereof include Viscoat# 150, Viscoat# 200, THF-A, MEDOL-10, OXE-10, and OXE-30 (available from OSAKA ORGANIC CHEMICAL INDUSTRY LTD), KAYARAD TC-110S (available from Nippon Kayaku Co., Ltd.), FA-711MM and FA-712HM (available from Showa Denko Materials co., Ltd.), and the like.

A blending amount of the component (B) is preferably 5 to 500 parts by mass, more preferably 6 to 300 parts by mass, and still more preferably 7 to 100 parts by mass, and particularly preferably more than 10 parts by mass and less than 50 parts by mass, with respect to 100 parts by mass of the component (A). That is, in a preferable embodiment of the present invention, the component (B) is contained in an amount of 5 to 500 parts by mass with respect to 100 parts by mass of the component (A). Within the above range, a cured material having more excellent compression set can be obtained while attaining an even lower viscosity of the composition.

<Component (C)>

The component (C) that can be used in the present invention is a radical initiator. Examples of the component (C) include photoradical initiators, organic peroxides (thermal radical initiators), and the like. A cured process of the radical curable resin composition of the present invention can be selected from photocuring, thermosetting, or redox curing, by selecting the component (C) of the present invention. For example, in a case of imparting "photocurability" to a radical curable resin composition, a photoradical initiator can be selected. In a case of imparting "thermosetting or curing by redox reaction", an organic peroxide can be selected.

A blending amount of the component (C) is not particularly limited, and is preferably 0.1 to 30 parts by mass, more preferably 0.3 to 15 parts by mass, and particularly preferably 0.5 to 10 parts by mass, with respect to 100 parts by mass of the component (A), from the viewpoint of obtaining a cured material having excellent compression set.

The photoradical initiator, which is one of the components (C), is not limited as long as it is a compound that

generates radicals by the irradiation with active energy rays. Here, the active energy rays include all light in a broad sense such as radiation such as α-rays and β-rays, electromagnetic waves such as γ-rays and X-rays, electron beams (EB), ultraviolet rays having a wavelength of about 100 to 400 nm, and visible light having a wavelength of about 400 to 800 nm, and are preferably ultraviolet rays. Examples of the component (C) include acetophenone-based photoradical polymerization initiators, benzoin-based photoradical polymerization initiators, benzophenone-based photoradical polymerization initiators, thioxanthone-based photoradical polymerization initiators, acylphosphine oxide-based photoradical polymerization initiators, titanocene-based photoradical polymerization initiators, and the like. Among them, acetophenone-based photoradical polymerization initiator and acylphosphine oxide-based photoradical polymerization initiator are preferable from the viewpoint that a cured material having excellent compression set can be obtained by the irradiation with active energy rays. Further, these may be used alone or two or more types thereof may be used in combination.

Examples of the acetophenone-based photoradical polymerization initiator include, but is not limited thereto, diethoxyacetophenone, 2-hydroxy-2-methyl-1-phenyl-propan-1-one, benzyl dimethyl ketal, 4-(2-hydroxyethoxy) phenyl-(2-hydroxy-2-propyl) ketone, 1-hydroxy-cyclohexyl-phenyl-ketone, 2-methyl-2-morpholino (4-thiomethylphenyl) propan-1-one, 2-benzyl-2-dimethylamino-1-(4-morpholinophenyl) butanone, 2-hydroxy-2-methyl-1-[4-(1-methylvinyl) phenyl] propanone oligomer, and the like. Examples of commercially available product of the acetophenone-based photoradical polymerization initiator include IRGACURE184, IRGACUR1173, IRGACURE2959, IRGACURE127 (available from BASF), and ESACURE KIP-150 (available from Lamberti s.p.a.).

Examples of the acylphosphine oxide-based photoradical polymerization initiator include, but is not limited thereto, bis(2,4,6-trimethylbenzoyl)-phenylphosphine oxide, 2,4,6-trimethylbenzoyl-diphenylphosphine oxide and the like. Examples of commercially available product of the acylphosphine oxide-based photoradical polymerization initiator include IRGACURE TPO, IRGACURE819, and IRGACURE819DW (available from BASF).

The organic peroxide, which is one of the components (C), may be a compound in which radicals are generated by heating or redox reaction. Here, it is appropriate that the heating is performed at, for example, temperature of 50°C or higher, preferably 80°C or higher, more preferably 100°C or higher, and in the case of heating, it is also referred to as a thermal radical polymerization initiator. The redox reaction is also called reduction/oxidation, and is a phenomenon in which reduction/oxidation occurs due to radicals released from an organic peroxide. The redox reaction is preferable because radicals can be generated at room temperature. The organic peroxide is not particularly limited, and examples thereof include ketone peroxides such as methyl ethyl ketone peroxide, cyclohexanone peroxide, 3,3,5-trimethylcyclohexanone peroxide, methylcyclohexanone peroxide, methylacetoacetate peroxide, and acetylacetone peroxide; peroxyketals such as 1,1-bis(t-butylperoxy)-3,3,5-trimethylcyclohexane, 1,1-bis(t-butylperoxy) cyclohexane, 2,2-bis(t-butylperoxy) octane, n-butyl-4,4-bis(t-butylperoxy) valerate, and 2,2-bis(t-butylperoxy) butane; hydroperoxides such as t-butylhydroperoxide, cumene hydroperoxide, diisopropylbenzene hydroperoxide, p-menthane hydroperoxide, 2,5-dimethyl hexane-2,5-dihydroperoxide, and 1,1,3,3-tetramethylbutyl hydroperoxide; dialkyl peroxides such as di-t-butyl peroxide, t-butylcumyl peroxide, dicumyl peroxide, α,α'-bis(t-butylperoxy-m-isopropyl) benzene, 2,5-dimethyl-2,5-di(t-butylperoxy) hexane, and 2,5-dimethyl-2,5-di(t-butylperoxy) hexin-3; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichloro benzoyl peroxide, and m-toluoyl peroxide; peroxydicarbonates such as diisopropylperoxydicarbonate, di-2-ethylhexyl peroxydicarbonate, di-n-propylperoxydicarbonate, bis-(4-t-butylcyclohexyl) peroxydicarbonate, dimyristylperoxydicarbonate, di-2-ethoxyethylperoxydicarbonate, dimethoxyisopropylperoxydicarbonate, di(3-methyl-3-methoxybutyl) peroxydicarbonate, and diallyl peroxydicarbonate; peroxyesters such as t-butyl peroxyacetate, t-butyl peroxyisobutyrate, t-butyl peroxypivalate, t-butyl peroxyneodecanoate, cumylperoxyneodecanoate, t-butylperoxy-2-ethylhexanoate, t-butylperoxy-3,5,5-trimethylhexanoate, t-butylperoxylaurate, t-butylperoxybenzoate, di-t-butylperoxyisophthalate, 2,5-dimethyl-2,5-di (benzoylperoxy) hexane, t-butylperoxymaleic acid, t-butylperoxyisopropyl carbonate, cumylperoxyoctoate, t-hexylperoxyneodecanoate, t-hexyl peroxy pivalate, t-butyl peroxy neohexanoate, t-hexyl peroxy neohexanoate, and cumil peroxy neohexanoate; acetyl cyclohexyl sulfonyl peroxide, t-butyl peroxyallyl carbonate, and the like. These organic peroxides may be used alone, or two or more types thereof may be used in combination. Among them, cumene hydroperoxide is preferably used from the viewpoint of curability.

When the organic peroxide is used as the component (C), a curing accelerator can be blended for the purpose of promoting the redox reaction. The curing accelerator is not particularly limited, and saccharin (o-benzoic sulfimide), a hydrazine compound, an amine compound, a mercaptan compound, a transition metal-containing compound, and the like are preferably used.

Examples of the hydrazine compound include 1-acetyl-2-phenylhydrazine, 1-acetyl-2 (p-tolyl) hydrazine, 1-benzoyl-2-phenylhydrazine, 1-(1',1',1'-trifluoro) acetyl-2-phenylhydrazine, 1,5-diphenyl-carbohydrazine, 1-formyl-2-phenylhydrazine, 1-acetyl-2-(p-bromophenyl) hydrazine, 1-acetyl-2-(p-nitrophenyl) hydrazine, 1-acetyl-2-(2'-phenylethyl hydrazine), ethyl carbazate, p-nitrophenyl hydrazine, p-trisulfonyl hydrazine, and the like.

Examples of the amine compound include heterocyclic secondary amines such as 2-ethylhexylamine, 1,2,3,4-tetrahydroquinone, and 1,2,3,4-tetrahydroquinaldine; heterocyclic tertiary amines such as quinoline, methylquinoline,quinaldine, and quinoxaline phenazine; aromatic tertiary amines such as N,N-dimethyl-para-toluidine, N,N-dimethylanisidine, and N,N-dimethylaniline; azole compounds such as 1,2,4-triazole, oxazole, oxadiazole, thiadiazole, benzotriazole, hydroxybenzotriazole, benzoxazole, 1,2,3-benzothiadiazole, and 3-mercaptobenzotrisol; and the like.

Examples of the mercaptan compound include n-dodecyl mercaptan, ethyl mercaptan, butyl mercaptan, tris-[(3-mercaptopropionyloxy)-ethyl]-isocyanurate, pentaerythritol tetrakis(3-mercaptopropionate), and dipentaerythritol hexakis(3-mercaptopropionate), trimethylolpropane tris(3-mercaptopropionate), trimethylolpropan tristhioglycolate, pentaerythritol tetrakisthioglycolate, and the like.

As the transition metal-containing compound, a metal chelate complex salt is preferably used. For example, pentadione iron, pentadione cobalt, pentadione copper, propylenediamine copper, ethylenediamine copper, iron naphthate, nickel naphthate, cobalt naphthate, copper naphthate, copper octate, iron hexoate, iron propionate, acetylacetone vanadium, and the like can be mentioned.

The curing accelerator may be used alone or two or more may be used in combination. Among them, a mixture of saccharin, a hydrazine-based compound, an amine-based compound, and a transition metal-containing compound is more preferable because it has a good curing promoting effect.

<Optional component(s)>

With respect to the curable resin composition of the present invention, as long as the object of the present invention is not impaired, a (meth)acrylate monomer (not including the component (B) of the present invention), a polymer or oligomer having a (meth)acryloyl groups (not including the component (A) of the present invention), various elastomers such as a styrene-based copolymer, and an additive(s) such as a filler, a storage stabilizer, an antioxidant, a light stabilizer, a plasticizer, a pigment, a flame retardant, and a surfactant can be used.

The present invention may be further blended with a (meth)acrylate monomer (not including the component (B) of the present invention). The (meth)acrylate monomer is a compound polymerized by radicals generated by the component (C) of the present invention, and is used as a reactive diluent. However, the component (B) of the present invention shall be excluded. Further, as the (meth)acrylate monomer, for example, monofunctional, bifunctional, trifunctional, and polyfunctional monomers and the like can be used. Among these, a (meth)acrylate monomer having an alkyl group or an alicyclic hydrocarbon group having 5 to 30 carbon atoms is preferable because it is compatible with the component (A) of the present invention and has excellent curability.

The (meth)acrylate monomer having an alkyl group having 5 to 30 carbon atoms is not particularly limited, and examples thereof include 2-ethylhexyl (meth)acrylate, octyl (meth)acrylate, isooctyl (meth)acrylate, decyl (meth)acrylate, dodecyl (meth)acrylate, isodecyl (meth)acrylate, lauryl (meth)acrylate, n-octadecyl (meth)acrylate, isooctadecyl (meth)acrylate, nonadecan (meth)acrylate, 3-heptyldecyl-1-(meth)acrylate, stearyl (meth)acrylate, and the like. Further, examples of the (meth)acrylate monomer having an alicyclic hydrocarbon group having 5 to 30 carbon atoms (excluding the component (B) of the present invention) include cyclohexyl (meth)acrylate, t-butylcyclohexyl (meth)acrylate, trimethylcyclohexyl (meth)acrylate, dicyclopentanyl (meth)acrylate, isobornyl (meth)acrylate, and the like. The (meth)acrylate monomer can be used alone or as a mixture of two or more.

A blending amount of the (meth)acrylate monomer is not particularly limited, and a normal amount can be used. The blending amount of the (meth)acrylate monomer is preferably 3 to 300 parts by mass, more preferably 5 to 200 parts by mass, and particularly preferably 10 to 100 parts by mass, with respect to 100 parts by mass of the component (A).

The polymer or oligomer having a (meth)acryloyl group (not including the component (A) of the present invention) is not particularly limited, and examples thereof include urethane (meth)acrylate with a polybutadiene skeleton, urethane (meth)acrylate with a hydrogenated polybutadiene skeleton, urethane (meth)acrylate with a polycarbonate skeleton, urethane (meth)acrylate with a polyether skeleton, urethane (meth)acrylate with a polyester skeleton, urethane (meth)acrylate of a castor oil skeleton, isoprene-based (meth)acrylate, hydrogenated isoprene-based (meth)acrylate, epoxy (meth)acrylate, a (meth)acryloyl group-containing acrylic polymer, and the like. Among them, from the viewpoint that it has excellent compatibility with the component (A) and the component (B) of the present invention, urethane (meth)acrylate with a polybutadiene skeleton, urethane (meth)acrylate with a hydrogenated polybutadiene skeleton, urethane (meth)acrylate of a castor oil skeleton, isoprene-based (meth)acrylate, and hydrogenated isoprene-based (meth)acrylates are preferable. In the present invention, the oligomer is a compound having a repeating unit of a monomer as a main chain and consisting of 2 to 100 repeating units. Further, these may be used alone or two or more types thereof may be used in combination.

A blending amount of the polymer or oligomer having a (meth)acryloyl group is not particularly limited, and a normal amount can be used. The blending amount of the polymer or oligomer having a (meth)acryloyl group is preferably about 3 to 300 parts by mass with respect to 100 parts by mass of the component (A).

With respect to the present invention, a styrene-based copolymer may be blended for the purpose of adjusting rubber physical characteristics of the cured material. The styrene-based copolymer is not particularly limited, and examples thereof include styrene-butadiene copolymers, styrene-isoprene copolymers (SIP), styrene-butadiene copolymers (SB), styrene-ethylene-butylene-styrene copolymers (SEBS), styrene-isobutylene-styrene copolymers (SIBS), acrylonitrile-styrene copolymers (AS), styrene-butadiene-acrylonitrile copolymers (ABS), and the like.

With respect to the present invention, a filler may be added in an amount that does not impair storage stability for the purpose of improving elastic modulus, fluidity, and the like of the cured material. Specific examples thereof include organic powder, inorganic powder, metallic powder, and the like. Examples of the inorganic powder as the filler include glass, fumed silica, alumina, mica, ceramics, silicone rubber powder, calcium carbonate, aluminum nitride, carbon powder, kaolin clay, dried clay minerals, dried diatomaceous earth, and the like. A blending amount of the inorganic powder is not particularly limited, and a normal amount can be used. The blending amount of the inorganic powder is preferably about 0.1 to 100 parts by mass with respect to 100 parts by mass of the component (A).

Fumed silica can be blended for the purpose of adjusting viscosity of the curable resin composition or improving mechanical strength of the cured material. Preferably, for example, those hydrophobized with organochlorosilanes, polyorganosiloxane, hexamethyldisilazane and the like can be used. Specific examples of fumed silica include commercially available products such as Aerosil R974, R972, R972V, R972CF, R805, R812, R812S, R816, R8200, RY200, RX200, RY200S, and R202 available from NIPPON AEROSIL CO., LTD.

Examples of the organic powder as the filler include polyethylene, polypropylene, nylon, crosslinked acryl, crosslinked polystyrene, polyester, polyvinyl alcohol, polyvinyl butyral, and polycarbonate. A blending amount of the organic powder is preferably about 0.1 to 100 parts by mass with respect to 100 parts by mass of the component (A).

A storage stabilizer may be added to the present invention. As the storage stabilizer, a radical absorber such as benzoquinone, hydroquinone, or hydroquinone monomethyl ether, a metal chelating agent such as ethylenediaminetetraacetic acid or 2-sodium salt thereof, oxalic acid, acetylacetone, o-aminophenol, and the like can be added.

A blending amount of the storage stabilizer is not particularly limited, and a normal amount can be used. The blending amount of the storage stabilizer is preferably about 0.001 to 15 parts by mass with respect to 100 parts by mass of the component (A).

An antioxidant may be added to the present invention. Examples of the antioxidant include quinone-based compounds such as β-naphthoquinone, 2-methoxy-1,4-naphthoquinone, methylhydroquinone, hydroquinone, hydroquinone monomethyl ether, mono-tert-butyl hydroquinone, 2,5-di-tert-butyl hydroquinone, p-benzoquinone, 2,5-diphenyl-p-benzoquinone, and 2,5-di-tert-butyl-p-benzoquinone; phenols (phenol-based compounds) such as phenothiazine, 2,2-methylene-bis(4-methyl-6-tert-butylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-methylphenylacrylate, 2-[1-(2-hydroxy-3,5-di-tert-pentylphenyl) ethyl]-4,6-di-tert-pentylphenyl acrylate, 4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl) propionyloxy]-1,1-dimethylethyl]-2,4,8,10-tetraoxa spiro[5,5] undecane, pentaerythritol tetrakis[3-(3,5-di-tert-butyl-4-hydroxyphenyl) propionate], thiodiethylenebis[3-(3,5-di-tert-butyl-4-hydroxyphenyl) propionate], octadecyl-3-(3,5-di-tert-butyl-4-hydroxyphenyl) propionate, N,N'-hexane-1,6-diylbis[3-(3,5-di-tert-butyl-4-hydroxyphenyl) propionamide], benzenepropanoic acid, 3,5-bis(1,1-dimrhtylethyl)-4-hydroxy-, C7-C9 branched alkyl esters, 2,4-dimethyl-6-(1-methylpentadecyl) phenol, diethyl [[3,5-bis(1,1-dimethylethyl)-4-hydroxyphenyl] methyl] phosphonate, 3,3',3",5,5',5"-hexa-tert-butyl-a,a',a"-(mesitylene-2,4,6-tolyl) tri-p-cresol, calcium diethylbis[[3,5-bis(1,1-dimethylethyl)-4-hydroxyphenyl] methyl] phosphonate, 4,6-bis(octylthiomethyl)-o-cresol, ethylene bis(oxyethylene) bis[3-(5-tert-butyl-4-hydroxy-m-tolyl) propionate], hexamethylenebis[3-(3,5-di-tert-butyl-4-hydroxyphenyl) propionate, 1,3,5-tris(3,5-di-tert-butyl-4-hydroxybenzyl)-1,3,5-triazine-2,4,6 (1H,3H,5H)-trione, 1,3,5-tris[(4-tert-butyl-3-hydroxy-2,6-xylyl) methyl]-1,3,5-triazine-2,4,6 (1H,3H,5H)-trione, reaction product of N-phenylbenzeneamine with 2,4,6-trimethylpentene, 2,6-di-tert-butyl-4-(4,6-bis(octylthio)-1,3,5-triazine-2-ylamino) phenol, picric acid, and citric acid; phosphorus-based compounds such as tris(2,4-di-tert-butylphenyl) phosphite, tris[2-[[2,4,8,10-tetra-tert-butyldibenzo[d,f][1,3,2]-dioxaphosphephin-6-yl]oxy]ethyl]amine, bis(2,4-di-tert-butylphenyl) pentaerythritol diphosphite, bis[2,4-bis(1,1-dimethylethyl)-6-methylphenyl] ethyl ester phosphorous acid, tetrakis(2,4-di-tert-butylphenyl) [1,1-bisphenyl]-4,4'-diylbisphosphonite, 6-[3-(3-tert-butyl-4-hydroxy-5-methylphenyl) propoxy]-2,4,8,10-tetra-tert-butyl dibenz[d,f][1,3,2]dioxaphosphepin; sulfur-based compounds such as dilauryl 3,3'-thiodipropionate, dimyristil 3,3'-thiodipropionate, distearyl 3,3'-thiodipropionate, pentaerythrityl tetrakis(3-laurylthiopropionate), and 2-mercaptobenzimidazole; amine-based compounds such as phenothiazine; lactone-based compounds; vitamin E-based compounds; and the like. Among them, phenol-based compounds are preferable.

A blending amount of the antioxidant is not particularly limited, and a normal amount can be used. The blending amount of the antioxidant is preferably about 0.1 to 15 parts by mass with respect to 100 parts by mass of the component (A).

With respect to the present invention, a light stabilizer may be added. Examples of the light stabilizer include hindered amine-based compounds such as bis(2,2,6,6-tetramethyl-4-piperidyl) sebacate, bis(1,2,2,6,6-pentamethyl-4-piperidyl) sebacate, 4-benzoyloxy-2,2,6,6-tetramethylpiperidine, 1-[2-[3-(3,5-di-tert-butyl-4-hydroxyphenyl) propionyloxy] ethyl]-4-[3-(3,5-di-tert-butyl-4-hydroxyphenyl) propionyloxy]-2,2,6,6-tetramethylpiperidine, 1,2,2,6,6-pentamethyl-4-piperidinyl-methacrylate, bis(1,2,2,6,6-pentamethyl-4-piperidinyl) [[3,5-bis(1,1-dimethylethyl)-4-hydroxyphenyl] methyl] butylmalonate, decane diacid bis(2,2,6,6-tetramethyl-1 (octyloxy)-4-piperidinyl) ester, a reaction product of 1,1-dimethylethylhydroperoxide and octane, N,N',N",N"'-tetrakis-(4,6-bis-(butyl-(N-methyl-2,2,6,6-tetramethylpiperidine-4-yl) amino)-triazine-2-yl)-4,7-diazadecan-1,10-diamine, a polycondensate of dibutylamine·1,3,5-triazine·N,N'-bis(2,2,6,6-tetramethyl-4-piperidyl-1,6-hexamethylenediamine and N-(2,2,6,6-tetramethyl-4-piperidyl) butylamine, poly [[6-(1,1,3,3-tetramethylbutyl) amino-1,3,5-triazine-2, 4-diyl] [(2,2,6,6-tetramethyl-4-piperidyl) imino] hexamethylene [(2,2,6,6-tetramethyl-4-piperidyl) imino]], a polymer of dimethyl succinate and 4-hydroxy-2,2,6,6-tetramethyl-1-piperidinethanol, 2,2,4,4-tetramethyl-20-(β-lauryloxycarbonyl) ethyl-7-oxa-3,20-diazadispiro [5·1·11·2] heneicosan-21-one, β-alanine, N,-(2,2,6,6-tetramethyl-4-piperidinyl)-dodecylester/tetradecylester, N-acetyl-3-dodecyl-1-(2,2,6,6-tetramethyl-4-piperidiny1) pyrrolidine-2,5-dione, 2,2,4,4-tetramethyl-7-oxa-3,20-diazadispiro [5,1,11,2] heneicosan-21-one, 2,2,4,4-tetramethyl-21-oxa-3,20-diazadicyclo-[5,1,11,2]-heneicosan-20-propanoic acid dodecylester/tetradecylester, propanedioic acid, [(4-methoxyphenyl)-methylene]-bis(1,2,2,6,6-pentamethyl-4-piperidinyl) ester, higher fatty acid ester of 2,2,6,6-tetramethyl-4-piperidinol, 1,3-benzene dicarboxyamide, and N,N'-bis(2,2,6,6-tetramethyl-4-piperidinyl); benzophenone-based compounds such as octabenzone; benzotriazole-based compounds such as 2-(2H-benzotriazole-2-yl)-4-(1,1,3,3-tetramethylbutyl) phenol, 2-(2-hydroxy-5-methylphenyl) benzotriazole, 2-[2-hydroxy-3-(3,4,5,6-tetrahydrophthalimide-methyl)-5-methylphenyl] benzotriazole, 2-(3-tert-butyl-2-hydroxy-5-methylphenyl)-5-chlorobenzotriazole, 2-(2-hydroxy-3,5-di-tert-pentylphenyl) benzotriazole, reaction product of methyl 3-(3-(2H-benzotriazole-2-yl)-5-tert-butyl-4-hydroxyphenyl) propionate and polyethylene glycol, and 2-(2H-benzotriazole-2-yl)-6-dodecyl-4-methylphenol; benzoate-based compounds such as 2,4-di-tert-butylphenyl-3,5-di-tert-butyl-4-hydroxybenzoate; triazine-based compounds such as 2-(4,6-diphenyl-1,3,5-triazine-2-yl)-5-[(hexyl) oxy] phenol, and the like. Particularly preferable is a hindered amine-based compound.

A blending amount of the light stabilizer is not particularly limited, and a normal amount can be used. The blending amount of the light stabilizer is preferably about 0.05 to 15 parts by mass with respect to 100 parts by mass of the component (A).

With respect to the present invention, an adhesion imparting agent may be added. Examples of the adhesion imparting agent include 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, methacryloxyoctyltrimethoxysilane, vinyltrimethoxysilane, vinyltrichlorosilane, vinyltriethoxysilane, vinyl-tris(β-methoxyethoxy) silane, γ-chloropropyltrimethoxysilane, β-(3,4-epoxycyclohexyl) ethyltrimethoxysilane, γ-glycidoxypropyltrimethoxysilane, γ-mercaptopropyltrimethoxysilane, γ-aminopropyltriethoxysilane, N-β-(aminoethyl)-γ-aminopropyltrimethoxysilane, N-β-(aminoethyl)-γ-aminopropylmethyldimethoxysilane, γ-ureidopropyltriethoxysilane, hydroxyethyl methacrylate phosphate, methacryloxyoxyethyl acid phosphate, methacryloxyoxyethyl acid phosphate monoethylamine half salt, 2-hydroxyethyl methacrylate phosphate, and the like. Among these, hydroxyethyl methacrylate phosphate, methacryloxyoxyethyl acid phosphate, methacryloxyoxyethyl acid phosphate monoethylamine half salt, 2-hydroxyethyl methacrylate phosphate and the like are preferable. A blending amount of the adhesion imparting agent is not particularly limited, and a normal amount can be used. The content of the adhesion imparting agent is preferably 0.05 to 30 parts by mass, and more preferably 0.2 to 10 parts by mass, with respect to 100 parts by mass of the component (A).

The curable resin composition of the present invention can be produced by a known method in the related art. For example, it can be produced by combining a predetermined amount of the components (A) to (C) and, if necessary, the above optional components, and mixing them using a mixing means such as a mixer (for example, a planetary mixer) at a temperature of preferably 10°C to 70°C for preferably 0.1 to 5 hours. Moreover, it is preferable to produce in a light-shielded environment.

The curable resin composition of the present invention has a low viscosity. Therefore, the curable resin composition of the present invention can be easily applied (excellent in coating workability). Specifically, the viscosity of the curable resin composition is 750 Pa·s or less, preferably less than 600 Pa·s, and particularly preferably 520 Pa·s or less, from the viewpoint of coating workability. The lower limit of the viscosity of the curable resin composition is not particularly limited because the lower the viscosity, the more preferable. For example, the viscosity of the curable resin composition may be 0.1 Pa ·s or more, and preferably 3 Pa·s or more. In the present specification, a value measured by the method described in the following examples is adopted as the viscosity of the curable resin composition.

Further, by using the curable resin composition of the present invention, a cured material having low compression set can be obtained. Specifically, the compression set of the cured material of the curable resin composition of the present invention is 5% or less (lower limit: 0%). In the present specification, a value measured by the method described in the following examples is adopted as the compression set of the cured material.

A method of obtaining a cured material of the curable resin composition of the present invention is not particularly limited and can be appropriately selected depending on the desired application. As an example, there is a method of applying a curable resin composition to an adherend to form a coating film (coating method/step) and then curing the coating film (curing method/step). Hereinafter, the above method will be described, but the present invention is not limited to the following method.

<Coating method/step>

As a method of applying the curable resin composition of the present invention to an adherend, a known method with a sealant or an adhesive can be used. For example, methods such as dispensing, spraying, inkjet printing, screen printing, gravure printing, dipping, and spin coating using an automatic coating machine can be used. The curable resin composition of the present invention is preferably liquid at 25°C from the viewpoint of the coatability.

<Curing method>

A light source for curing the curable resin composition of the present invention by irradiation with active energy rays (for example, light such as ultraviolet rays and visible light) is not particularly limited. Examples thereof include a low pressure mercury lamp, a medium pressure mercury lamp, and a high pressure mercury lamp, an ultra-high pressure mercury lamp, a black light lamp, a microwave pumped mercury lamp, a metal halide lamp, a sodium lamp, a halogen lamp, a xenon lamp, an LED, a fluorescent lamp, sunlight, an electron beam irradiation device, and the like. A irradiation amount (integrated light amount) of light irradiation is preferably 5 $kJ/m^2$ or more, and more preferably 15 $kJ/m^2$ or more, from the viewpoint of characteristics of the cured material. Further, the irradiation amount (integrated light intensity) of light irradiation is preferably 100 $kJ/m^2$ or less, and more preferably 150 $kJ/m^2$ or less, from the viewpoint of obtaining a cured material having excellent compression set. Further, the curable resin composition of the present invention can be cured by heating. A method of heating is not particularly limited, and a thermostat, far-infrared heater, and the like may be mentioned. As for the curing conditions, for example, it is appropriate to perform the heating at a temperature, for example, of 40°C to 300°C, preferably 60°C to 200°C, and particularly preferably 80°C to 150°C for, for example, 10 seconds to 3 hours, preferably 20 seconds to 60 minutes, and particularly preferably 30 seconds to 30 minutes.

<Cured material>

A cured material of the present invention can be obtained by irradiating with active energy rays such as ultraviolet rays or heating the curable resin composition of the present invention by the above-mentioned curing method. The cured material of the present invention may be cured by any method as long as the curable resin composition of the present invention is cured. That is, the present invention also provides a cured material obtained by curing the curable resin composition of the present invention.

<Applications and sealant>

The curable resin composition or a cured material thereof of the present invention can be preferably used as a curable sealant. In the present invention, the sealant may include applications such as an adhesive, a coating agent, a casting agent, and a potting agent. The curable resin composition of the present invention is preferably liquid at 25°C for use in such applications.

Since the curable resin composition or a cured material thereof of the present invention is a rubber elastic body having low gas permeability, low moisture permeability, excellent heat resistance, excellent acid resistance, and excellent flexibility, specific examples of the applications of the sealant include use in laminates, sensors, substrates, pharmaceutical/medical instruments/equipment such as fuel cells, solar cells, dye-sensitized solar cells, lithium-ion batteries, electrolytic capacitors, liquid crystal displays, organic EL displays, electronic papers, LEDs, hard disk devices, photodiodes, optical communications/circuits, electric wires/cables/optical fibers, optical isolators, and the like. Among these applications, the curable resin composition of the present invention is particularly preferable for the application of the fuel cells, particularly the application of polymer electrolyte fuel cells, in terms of a low viscosity and excellent compression set. The sealant used for the fuel cell (particularly the polymer electrolyte fuel cell) is required to have a compression set of 5% or less at a temperature higher than an operating temperature of 80°C, and the present invention can satisfy the characteristics, which is suitable. That is, the present invention also provides a curable sealant for a fuel cell, which contains the curable resin composition of the present invention. Further, in the preferable embodiment of the above aspect, the curable sealant for a fuel cell is a curable sealant for a polymer electrolyte fuel cell. The present invention also provides a cured material obtained by curing the curable sealant for a fuel cell of the present invention.

The curable sealant for a fuel cell according to the present invention may be used in any part, and is preferably used in a periphery of members such as a separator, a frame, an electrolyte membrane, a fuel electrode, an air electrode, and a membrane electrode assembly, which are a member in a fuel cell. More preferably, it is used for sealing between adjacent separators in a fuel cell and for sealing between a frame and an electrolyte membrane or a membrane electrode assembly (MEA) in a fuel cell. That is, in a preferable embodiment of the present invention, the curable sealant for a fuel cell is a curable sealant for a fuel cell used in a periphery of any member selected from the group consisting of a separator, a frame, an electrolyte membrane, a fuel electrode, an air electrode, and a membrane electrode assembly,

which are a member in a fuel cell (is used to seal a periphery of any member selected from the group consisting of a separator, a frame, an electrolyte membrane, a fuel electrode, an air electrode, and a membrane electrode assembly, as a member in a fuel cell). In a more preferable embodiment of the present invention, the curable sealant for a fuel cell is a sealant between adjacent separators in a fuel cell, a sealant between a frame and an electrolyte membrane or a membrane electrode assembly in a fuel cell (is used to seal between adjacent separators in a fuel cell, or between a frame and an electrolyte membrane or a membrane electrode assembly in a fuel cell).

The present invention provides a fuel cell including any selected form the group consisting of a seal between adjacent separators in a fuel cell and a seal between a frame and an electrolyte membrane or a membrane electrode assembly in a fuel cell, wherein any of the above seals is a cured material of the present invention (adjacent separators in a fuel cell, or a frame and an electrolyte membrane or a membrane electrode assembly in a fuel cell are sealed with the cured material according to the present invention). Further, in the above aspect, it is preferable that the fuel cell is a polymer electrolyte fuel cell.

<Fuel cell>

The fuel cell is a power generation device that generates electricity by chemically reacting hydrogen and oxygen. In addition, there are four types of fuel cells: a polymer electrolyte fuel cell, a phosphoric acid fuel cell, a molten carbonate fuel cell, and a solid oxide fuel cell. Among them, since the polymer electrolyte fuel cell has high power generation efficiency while an operating temperature is relatively low (about 80°C), it has been used for applications as a power source for automobiles, a power generation device for homes, a small power source for electronic devices such as a mobile phone, an emergency power source, and the like.

As illustrated in FIG. 1, a cell 1 of the representative polymer electrolyte fuel cell has a structure provided with a membrane electrode assembly 5 (MEA) having a polymer electrolyte membrane 4 sandwiched between an air electrode 3a and a fuel electrode 3b, a frame 6 that supports the MEA, and a separator 2 with a gas flow path. Further, when the polymer electrolyte fuel cell is started, a fuel gas (hydrogen gas) and an oxidation gas (oxygen gas) are supplied through an oxidation gas flow path 8a and a fuel gas flow path 8b. In addition, cooling water flows through a flow path 9 for the purpose of alleviating heat generation during power generation. As illustrated in FIG. 2, a package obtained by stacking several hundred cells is called a cell stack 10. The polymer electrolyte fuel cell 11 has such a cell stack 10.

When fuel gas (hydrogen gas) is supplied to the fuel electrode and oxidation gas (oxygen gas) is supplied to the oxygen electrode (air electrode), the following reactions occur at each electrode, and as a whole, a reaction that produces water ($H_2 + 1/2O_2 \rightarrow H_2O$) occurs. More specifically, as described below, protons ($H^+$) generated at the fuel electrode diffuse in the solid polymer membrane (polymer electrolyte membrane) and move to the oxygen electrode side, and reacted with oxygen to produce water ($H_2O$) which is discharged from the oxygen electrode side.

[Chem. 4]

Fuel electrode (anode) : $H_2 \rightarrow 2H^+ + 2e^-$

Air electrode (cathode) : $1/2O_2 + 2H^+ + 2e^- \rightarrow H_2O$

In order to start a polymer electrolyte fuel cell, it is necessary to separately supply a fuel gas containing hydrogen to an anode electrode and an oxidation gas containing oxygen to a cathode electrode separately. This is because if the separation is insufficient and one of the gases is mixed with the other gas, the power generation efficiency may decrease. From this, a sealant has been often used for the purpose of preventing leakage of fuel gas, oxygen gas, and the like. Specifically, the sealant is used between adjacent separators, between a separator and a frame, between a frame and an electrolyte membrane or a membrane electrode assembly (MEA), and the like. That is, in a preferable embodiment of the present invention, the curable sealant for a fuel cell according to the present invention is a sealant used between adjacent separators in a fuel cell, or a sealant used between a frame and an electrolyte membrane or a membrane electrode assembly in a fuel cell.

Examples of the polymer electrolyte membrane include cation exchange membranes having ionic conductivity. In view of chemical stability and resistance to operation at high temperatures, the polymer electrolyte membrane is preferably a fluorinated polymer having a sulfonic acid group and the like. Examples of commercially available products thereof include NAFION (registered trademark) available from DuPont, FLEMION (registered trademark) available from AGC Inc. (formerly Asahi Glass Co., Ltd.), ACIPLEX (registered trademark) available from Asahi Kasei Corporation, and the like. Generally, the polymer electrolyte membrane is a difficult-to-adhere material, but it can be adhered by using the curable resin composition of the present invention.

[Chem. 5]

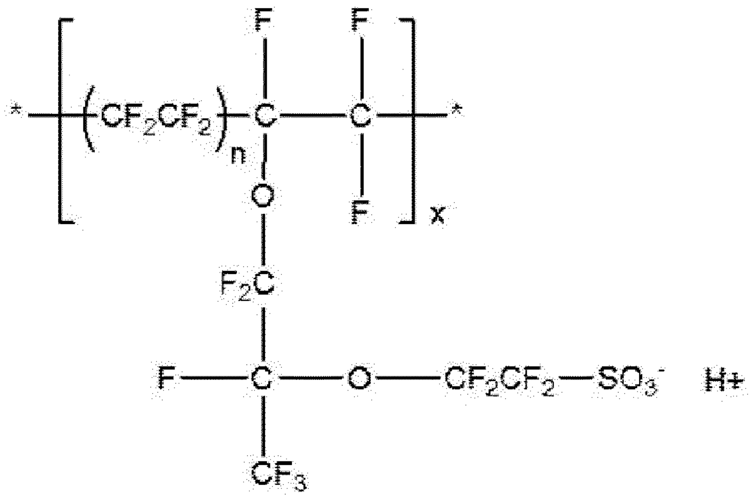

NAFION (registered trademark)

The fuel electrode is called a hydrogen electrode or an anode, and known ones can be used. For example, those having a catalyst such as platinum, nickel, or ruthenium supported on carbon have been used. Further, the air electrode is called an oxygen electrode or a cathode, and known ones can be used. For example, those having a catalyst such as platinum or alloy supported on carbon have been used. A surface of each electrode may be provided with a gas diffusion layer that functions to diffuse a gas and moisturize an electrolyte. A known gas diffusion layer can be used, and examples thereof include carbon paper, carbon cloth, carbon fiber, and the like.

As illustrated in FIG. 1, the separator 2 has fine uneven flow paths through which a fuel gas or an oxidation gas passes and are supplied to the electrodes. The separator is made of aluminum, stainless steel, titanium, graphite, carbon, and the like.

The frame supports and reinforces a thin electrolyte membrane or MEA so as not to break. Examples of a material of the frame include thermoplastic resins such as polyvinyl chloride, polyethylene naphthalate, polyethylene terephthalate, polypropylene, and polycarbonate. Further, in order to bond members using the curable resin composition or the cured material thereof of the present invention, it is preferable that the members can transmit light.

The fuel cell of the present invention is a fuel cell characterized comprising a sealed part with the curable resin composition or a cured material thereof of the present invention. Examples of member that requires to be sealed in the fuel cell include a separator, a frame, an electrolyte membrane, a fuel electrode, an air electrode, MEA, and the like. More specific examples of the location to be sealed include that between adjacent separators, that between the separator and the frame, that between the frame and the electrolyte membrane or MEA, and the like. A main purpose of the sealing "between the separator and the frame" or "between the polymer electrolyte membrane or MEA and the frame" is to prevent gas mixing or leakage, and a purpose of the sealing between adjacent separators is to prevent gas leakage and to prevent cooling water from leaking to the outside from the cooling water flow path. Since an acid generated from the electrolyte membrane would create a strong acid atmosphere, the sealant may be required to have acid resistance.

<Sealing method>

A sealing method using the curable resin composition of the present invention is not particularly limited. Typical examples thereof include FIPG (foamin-place gasket), CIPG (cure-in-place gasket), MIPG (mold-in-place gasket), liquid injection molding, and the like.

The curable resin composition of the present invention is suitable for CIPG and MIPG, which require compression sealing performance, because it has characteristics such that a cured material having excellent compression set can be obtained.

FIPG is a method which comprises applying the curable resin composition of the present invention to a flange as a part to be sealed by an automatic coating machine or the like, and in the state of being bonded to another flange, irradiating the curable resin composition with active energy rays such as ultraviolet rays from the flange side capable of transmitting light, to be cured to make the flanges adhered and sealed. More specifically, it is a method of sealing at least a portion of a part to be sealed that has at least two flanges between the at least two flanges, wherein at least one of the flanges can transmit light of active energy rays, the method comprising a step of applying the curable resin composition as mentioned above to a surface of at least one of the flanges, a step of bonding one flange to which the

curable resin composition is applied and the other flange via the curable resin composition, and a step of irradiating an active energy ray through the flange that can transmit light of active energy rays, to cure the curable resin composition and to seal at least a portion between the at least two flanges.

CIPG is a method which comprises subjecting the curable resin composition of the present invention to bead-application to a flange of a part to be sealed by an automatic coating machine or the like, and irradiating the curable resin composition with active energy rays such as ultraviolet rays to form a gasket, and then bonding the flange the other flange, to make the flanges compressed and sealed. More specifically, it is a method of sealing at least a portion of a part to be sealed that has at least two flanges between the at least two flanges, the method comprising a step of applying the curable resin composition as mentioned above to at least one of the flanges, a step of irradiating the applied curable resin composition with active energy rays to cure the curable resin composition and to form a gasket formed of a cured material of the curable resin composition, and a step of placing the other flange on the gasket and crimping one flange applied with the curable resin composition and the other flange via the gasket to seal at least a portion between the at least two flanges.

MIPG is a method which comprises pressing a mold to a flange of a part to be sealed in advance, and injecting a curable resin composition into a cavity formed between the mold made of a light-transmitting material and the flange, and irradiating the curable resin composition with active energy rays such as ultraviolet rays for photocuring to form a gasket, and then bonding the flange the other flange, to make the flanges compressed and sealed. The mold is preferably made of a light-transmitting material, and specific examples thereof include glass, polymethylmethacrylate (PMMA), polycarbonate, cycloolefin polymer, olefin, and the like. Also, after forming the gasket, in order to make it easy to remove from the mold, it is preferable to apply a mold release agent such as fluorine-based or silicone-based mold release agent or the like in the mold in advance. More specifically, it is a method of sealing at least a portion of a part to be sealed that has at least two flanges between the at least two flanges, the method comprising a step of placing a mold for forming a gasket on at least one of the flanges, a step of injecting the curable resin composition as mentioned above into at least a portion of a gap between the mold for forming the gasket and the flange on which the mold is placed, a step of irradiating the curable resin composition with active energy rays to cure the curable resin composition and to form a gasket formed of a cured material of the curable resin composition, a step of removing the mold from the one flange, and a step of disposing the other flange on the gasket and crimping the one flange and the other flange via the gasket to seal at least a portion between the at least two flanges.

The liquid injection molding is a method which comprises pouring the curable resin composition of the present invention into a mold made of a light-transmitting material by a specific pressure, irradiating the curable resin composition with active energy rays such as ultraviolet rays for photocuring to form a gasket, and then, bonding the flange to the other flange, to make the flanges compressed and sealed. The mold is preferably made of a light-transmitting material, and specific examples thereof include glass, PMMA, polycarbonate, cycloolefin polymer, olefin, and the like. Also, after forming the gasket, in order to make it easy to remove from the mold, it is preferable to apply a mold release agent such as fluorine-based or silicone-based mold release agent or the like in the mold in advance.

The specific operations, conditions, and the like of the above FIPG, CIPG, MIPG, and liquid injection molding are the same as those of known operations, conditions, and the like in the related art except that the curable resin composition or cured material of the present invention is used. Alternatively, it can be modified as appropriate and used.

## Examples

Hereinbelow, the present invention will be described in more detail with reference to examples, but the present invention is not limited to these examples.

Synthesis Example 1

<Production of a1>

Production of polyisobutylene (a1) having an acryloyloxyethoxyphenyl group

After substituting the inside of a container of 5L separable flask with nitrogen, 200 mL of n-hexane and 2000 mL of butyl chloride were added, and the mixture was cooled to -70°C with stirring under a nitrogen atmosphere. Then, 840 mL (9 mol) of isobutylene, 12 g (0.05 mol) of p-dicumyl chloride and 1.1 g (0.012 mol) of 2-methylpyridine were added. After the reaction mixture was cooled to -70°C, 5.0 mL (0.05 mol) of titanium tetrachloride was added to start the polymerization. Three hours after the start of polymerization, 40 g of phenoxy ethyl acrylate (LIGHT ACRYLATE PO-A, available from Kyoeisha Chemical Co., Ltd.) and 110 ml of titanium tetrachloride were added thereto. Then, after continuing stirring at -70°C for 4 hours, 1000 ml of methanol was added to stop the reaction.

A supernatant was separated from the reaction solution, a solvent and the like were distilled off, a product was

dissolved in 3000 ml of n-hexane, washed with 3000 ml of pure water three times, and reprecipitated from methanol, then the solvent is distilled off under reduced pressure, and the resulting polymer was vacuum dried at 80°C for 24 hours, to obtain polyisobutylene (a1) having an acryloyloxyethoxyphenyl group.

The a1 contains $-[CH_2C(CH_3)_2]-$ unit and has two acryloyl groups. More specifically, the a1 is an oligomer of the Formula (1) wherein $R^1$ represents a phenylene group, PIB represents a polyisobutylene skeleton containing a $-[CH_2C(CH_3)_2]$ - unit, and $R^4$ represents a hydrocarbon group (ethylene group) having 2 carbon atoms, $R^2$ and $R^3$ each independently represent a hydrogen atom, $R^5$ represents a hydrogen atom, and n is 2. The number average molecular weight of the a1 component (chromatography method, polystyrene conversion) was 11100, and viscosity (25°C) of the a1 component was 1550 Pa·s. In addition, the a1 component was liquid at 25°C.

<Preparation of curable resin composition>

• Example 1

100 parts by mass of polyisobutylene (a1) having an acryloyloxyethoxyphenyl group obtained in the Synthesis Example 1 above as the component (A) of the present invention, 20 parts by mass of tetrahydrofurfuryl acrylate (Viscoat# 150, available from OSAKA ORGANIC CHEMICAL INDUSTRY LTD) as the component (B), and 1 part by mass of 2-hydroxy-2-methyl-1-phenyl-propan-1-one as the component (C) were added to a planetary mixer, and mixed with the planetary mixer at room temperature (25°C) for 60 minutes under shading, to obtain a curable resin composition of Example 1. The curable resin composition obtained in this Example was liquid at 25°C.

• Example 2

A curable resin composition (Example 2) was obtained in the same manner as in Example 1 except that the amount of tetrahydrofurfuryl acrylate added in Example 1 was changed to 30 parts by mass. The curable resin composition obtained in this Example was liquid at 25°C.

• Comparative Example 1

A curable resin composition of Comparative Example 1 was prepared in the same manner as in Example 1 except that lauryl acrylate (LA, available from OSAKA ORGANIC CHEMICAL INDUSTRY LTD) was used instead of tetrahydrofurfuryl acrylate in Example 1.

• Comparative Example 2

A curable resin composition of Comparative Example 2 was prepared in the same manner as in Example 1 except that dicyclopentanyl methacrylate (FA-513M, available from Showa Denko Materials co., Ltd.) was used instead of tetrahydrofurfuryl acrylate in Example 1.

• Comparative Example 3

A curable resin composition of Comparative Example 3 was prepared in the same manner as in Example 1 except that tricyclodecanedimethanol diacrylate (A-DCP, available from Osaka Organic SHIN-NAKAMURA CHEMICAL CO, LTD) was used instead of tetrahydrofurfuryl acrylate in Example 1.

The curable resin compositions of Examples 1 and 2 and Comparative Examples 1 to 3 were evaluated for viscosity and compression set according to the following methods. The results are indicated in Table 1. The test methods used in the Examples and Comparative Examples in Table 1 are as follows.

(1) Viscosity measurement method

A viscosity (Pa · s) of each curable resin composition was measured with a rheometer HAAKE MARS III available from Thermo Fisher Scientific Co., Ltd. under the following measurement conditions. From the viewpoint of coatability, in the present invention, the viscosity is preferably 750 Pa · s or less, and particularly preferably 600 Pa·s or less.

(Measurement conditions)

Shear velocity: 1 (1/s)
Temperature: 25°C

(2) Compression set test

Each cured resin composition was coated with a bead of 2 mm in height and 3 mm in width on a 70 mm × 70 mm aluminum plate with an automatic coating machine, and cured by being irradiated with ultraviolet rays at an integrated light intensity of 30 kJ/m$^2$ to make a test piece. Next, the test piece was used and was left in an oven at 90°C in a state of being compressed with a compression rate of 25% using a jig and spacer specified in JIS-K-6262 (2013). After 72 hours, it was taken out from the oven, and then a thickness of each test piece was measured, and a compression set was measured by the following equation. The results are evaluated based on the following criteria, and the results are indicated in Table 1. From the viewpoint of excellent reliability when used as a fuel cell sealant in the present invention, the compression set is preferably 5% or less.

[Equation 1]

Compression set [%]

= {[(Thickness of test piece before test) - (Thickness of test piece after durability test)]/[(Thickness of test piece before test) - (Thickness of spacer)]} × 100

<Evaluation criteria>

Pass: Compression set is 5% or less
Fail: Compression set is greater than 5%

[Table 1]

| | Example 1 | Example 2 | Comparative Example 1 | Comparative Example 2 | Comparative Example 3 |
|---|---|---|---|---|---|
| Viscosity | 505 | 330 | 148 | 529 | 1050 |
| Compression set | Pass | Pass | Fail | Fail | Fail |

According to Examples 1 and 2 in Table 1, it can be noted that the present invention can provide a curable resin composition capable of obtaining a cured material having a low viscosity and excellent compression set.
In addition, Comparative Examples 1 to 3 in Table 1 are a curable resin composition using lauryl acrylate, dicyclopentanyl methacrylate, or tricyclodecanedimethanol diacrylate, which are not the component (B) of the present invention, for which the compression sets were inferior. The viscosity of Comparative Example 3 was as high as 1050 Pa·s.
Further, regarding the curable resin compositions of Examples 1 and 2 and Comparative Examples 1 to 3, (3) moisture permeability (water vapor barrier property), (4) hydrogen gas barrier property test, and (5) hardness of cured material, (6) elongation rate, and (7) tensile strength were tested.

(3) Moisture permeability (water vapor barrier property)

The curable resin composition of Example 1 was poured into a frame of 200 mm × 200 mm × 1.0 mm. Then, it was irradiated with ultraviolet rays with an ultraviolet irradiator for 20 seconds at an integrated light intensity of 45 kJ/m$^2$, to prepare a sheet-shaped cured material having a thickness of 1.0 mm. 5 g of calcium chloride (anhydrous) was placed in an aluminum cup having an opening with a diameter of 30 mm, and the cured material was set in the cup. After measuring a "initial total weight" (g), it was left in a constant temperature and humidity chamber kept at an ambient temperature of 40°C and a relative humidity of 95% RH for 24 hours, and a "total weight after being left" (g) was measured

to calculate permeation humidity ($g/m^2 \cdot 24h$). The detailed test method conforms to JIS Z 0208. The test result of Example 1 was less than 50 $g/m^2 \cdot 24h$, and it was confirmed that the water vapor barrier property required for a curable sealant for a fuel cell was satisfied.

(4) Hydrogen gas barrier property test

In the same manner as in the (3) moisture permeability (water vapor barrier), the curable resin composition of Example 1 was irradiated with an ultraviolet irradiator for 20 seconds at an integrated light intensity of 45 $kJ/m^2$, to prepare a sheet-shaped cured material having a thickness of 1.0 mm. Next, the sheet-shaped cured material was tested in accordance with JIS K7126-1: 2006 (Plastics-Film and sheeting-Determination of gas-transmission rate-. Part 1: Differential-pressure method). Note that, a type of the test was a pressure sensor method, and the measurement was performed under the conditions if 23°C using a test gas (hydrogen gas) on a high pressure side at 100 kPa. The test result of Example 1 was less than $1 \times 10^{-15}$ $mol \cdot m/m^2 \cdot s \cdot Pa$, and it was confirmed that the hydrogen gas barrier property required for a curable sealant for a fuel cell was satisfied.

(5) Measurement of hardness

In the same manner as in the (3) moisture permeability (water vapor barrier), a thickness of the curable resin compositions of Examples 1 and 2 and Comparative Examples 1 to 3 was set to 1 mm, and the curable resin compositions were irradiated with ultraviolet rays at an integrated light intensity of 45 $kJ/m^2$ and cured to prepare a sheet-shaped cured material. While keeping a pressure surface of the A-type durometer (hardness meter) parallel to a test piece (which thickness was set to 6 mm by stacking six sheets of the cured material), the test piece was pressed with a force of 10 N to bring the pressure surface into close contact with the test piece. A maximum value was read in the measurement, and the maximum value is defined as "hardness". Details follow JIS K 6253 (2012). The results are indicated in Table 2.

In the present invention, the hardness is preferably in the range of 30 to 45 from the viewpoint of excellent compression set of the cured material.

(6) Measurement method of elongation rate of cured material

In the same manner as in the (3) moisture permeability (water vapor barrier), a thickness of the curable resin compositions of Examples 1 and 2 and Comparative Examples 1 to 3 was set to 1 mm, and the curable resin compositions were irradiated with ultraviolet rays at an integrated light intensity of 45 $kJ/m^2$ and cured to prepare a sheet-shaped cured material. A test piece was prepared by punching the cured material with a No. 3 dumbbell, and a marked line was written at 20 mm intervals on the test piece.

The test pieces was fixed to a chuck in the same manner as (7) measurement of tensile strength below, and pulled at a tensile speed of 500 mm/min until the test piece was cut. Since the test piece stretched and a distance between the marked lines increased during measurement, a distance between the marked lines was measured with a caliper until the test piece was cut. A rate of elongation is defined as an "elongation rate (%)" based on the initial marked line interval. Evaluation is based on the following criteria, and the results are indicated in Table 2. In the present invention, the elongation rate of the cured material is preferably 150% or more from the viewpoint of excellent compression set of the cured material.

(7) Measurement of tensile strength (tensile strength)

In the same manner as in the (3) moisture permeability (water vapor barrier), a thickness of the curable resin compositions of Examples 1 and 2 and Comparative Examples 1 to 3 was set to 1 mm, and the curable resin compositions were irradiated with ultraviolet rays at an integrated light intensity of 45 $kJ/m^2$ and cured to prepare a sheet-shaped cured material. A test piece was prepared by punching the cured material with a No. 3 dumbbell. Both ends of the test piece were fixed to a chuck so that a long axis of the test piece and a center of the chuck were aligned. The test piece was pulled at a tensile speed of 50 mm/min and a maximum load was measured. A strength at the maximum load is defined as a "tensile strength (MPa)". The results are indicated in Table 2. Details follow JIS K 6251 (2010). In the present invention, the tensile strength of the cured material is preferably in the range of 0.8 to 3.5 MPa from the viewpoint of excellent compression set of the cured material.

[Table 2]

| | Example 1 | Example 2 | Comparative Example 1 | Comparative Example 2 | Comparative Example 3 |
|---|---|---|---|---|---|
| Hardness | 34 | 38 | 29 | 46 | 58 |
| Tensile strength | 1.1 | 1.7 | 0.7 | 3.7 | 4.8 |
| Elongation rate | 165 | 155 | 135 | 335 | 155 |

Industrial Applicability

Since the present invention relates to a curable resin composition capable of obtaining a cured material having a low viscosity and excellent compression set, it can be used for various sealing applications. In particular, it is industrially useful because it is effective as a curable sealant for a fuel cell.

This application is based on Japanese Patent Application No. 2018-240570 filed on December 25, 2018, the disclosure of which is incorporated in its entirety by reference.

Reference Signs List

1 Cell of polymer electrolyte fuel cell
2 Separator
3a Air electrode (cathode)
3b Fuel electrode (anode)
4 Polymer electrolyte membrane
5 Membrane electrode assembly (MEA)
6 Flame
7 Adhesive or sealant
8a Oxidation gas flow path
8b Fuel gas flow path
9 Cooling water flow path
10 Cell stack
11 Polymer electrolyte fuel cell

## Claims

**1.** A curable resin composition comprising the following components (A) to (C):

component (A): an oligomer having one or more (meth)acryloyl groups and a polyisobutylene skeleton containing a $-[CH_2C(CH_3)_2]-$ unit;
component (B): a monofunctional monomer having a (meth)acryloyloxy group and a saturated heterocycle with a 4 or more membered ring;
component (C): a radical polymerization initiator.

**2.** The curable resin composition according to claim 1, wherein the component (A) is an oligomer having a polyisobutylene skeleton represented by the Formula (1):

[Chem. 1]

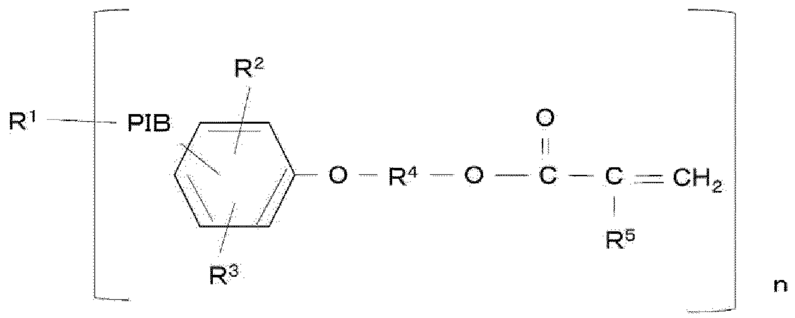

(1)

wherein $R^1$ represents a monovalent or polyvalent aromatic hydrocarbon group, or a monovalent or polyvalent aliphatic hydrocarbon group; PIB represents the polyisobutylene skeleton containing a $—[CH_2C(CH_3)_2]—$ unit; $R^4$ represents a divalent hydrocarbon group having 2 to 6 carbon atoms that may contain an oxygen atom; $R^2$ and $R^3$ independently represent a hydrogen atom or a monovalent hydrocarbon group having 1 to 20 carbon atoms;
$R^5$ represents a hydrogen atom, a methyl group, or an ethyl group; and
n is an integer in the range of 1 to 6.

**3.** The curable resin composition according to claim 1 or 2, wherein a hetero atom of the component (B) is oxygen.

**4.** The curable resin composition according to any one of claims 1 to 3, wherein the component (B) is contained at 5 to 500 parts by mass with respect to 100 parts by mass of the component (A).

**5.** The curable resin composition according to any one of claims 1 to 4, wherein the component (B) is at least one selected from the group consisting of (2-methyl-2-ethyl-1,3-dioxolan-4-yl) methyl (meth)acrylate, (3-ethyloxetane-3-yl) methyl (meth)acrylate, cyclic trimethylolpropane formal (meth)acrylate, tetrahydrofurfuryl (meth)acrylate, alkoxylated tetrahydrofurfuryl acrylate, and caprolactone-modified tetrahydrofurfuryl (meth)acrylate.

**6.** A curable sealant for a fuel cell comprising the curable resin composition set forth in any one of claims 1 to 5.

**7.** The curable sealant for a fuel cell according to claim 6, which is a curable sealant for the use in sealing a periphery of any member selected from the group consisting of a separator, a frame, an electrolyte membrane, a fuel electrode, an air electrode, and a membrane electrode assembly, which are a member in a fuel cell.

**8.** The curable sealant for a fuel cell according to claim 6 or 7, which is a sealant used between adjacent separators in a fuel cell, or a sealant used between a frame and an electrolyte membrane or membrane electrode assembly in a fuel cell.

**9.** The curable sealant for a fuel cell according to any one of claims 6 to 8, which is a curable sealant for a polymer electrolyte fuel cell.

**10.** A cured material obtained by curing the curable resin composition set forth in any one of claims 1 to 5 or the curable sealant for a fuel cell set forth in any one of claims 6 to 9.

**11.** A fuel cell comprising one selected from the group consisting of a seal between adjacent separators in a fuel cell and a seal between a frame and an electrolyte membrane or membrane electrode assembly in a fuel cell, wherein any of the seals is the cured material set forth in claim 10.

**12.** The fuel cell according to claim 11, wherein the fuel cell is a polymer electrolyte fuel cell.

**13.** A method of sealing at least a portion of a part to be sealed that has at least two flanges between the at least two flanges, wherein at least one of the flanges can transmit light of active energy rays,
the method including:

a step of applying the curable resin composition set forth in any one of claims 1 to 5 to a surface of at least one

of the flanges;
a step of bonding one flange to which the curable resin composition is applied and the other flange via the curable resin composition; and
a step of irradiating an active energy ray through the flange that can transmit light of active energy rays, to cure the curable resin composition and to seal at least a portion between the at least two flanges.

**14.** A method of sealing at least a portion of a part to be sealed that has at least two flanges between the at least two flanges,
the method including:

a step of applying the curable resin composition set forth in any one of claims 1 to 5 to at least one of the flanges;
a step of irradiating the applied curable resin composition with active energy rays to cure the curable resin composition and to form a gasket formed of a cured material of the curable resin composition; and
a step of placing the other flange on the gasket and crimping one flange applied with the curable resin composition and the other flange via the gasket to seal at least a portion between the at least two flanges.

**15.** A method of sealing at least a portion of a part to be sealed that has at least two flanges between the at least two flanges,
the method including:

a step of disposing a gasket forming mold on at least one of the flanges;
a step of injecting the curable resin composition set forth in any one of claims 1 to 5 into at least a portion of a gap between the gasket forming mold and the flange on which the mold is disposed;
a step of irradiating the curable resin composition with active energy rays to cure the curable resin composition and to form a gasket formed of a cured material of the curable resin composition;
a step of removing the mold from the one flange;
and
a step of placing the other flange on the gasket and crimping the one flange and the other flange via the gasket to seal at least a portion between the at least two flanges.

[Fig. 1]

FIG.1

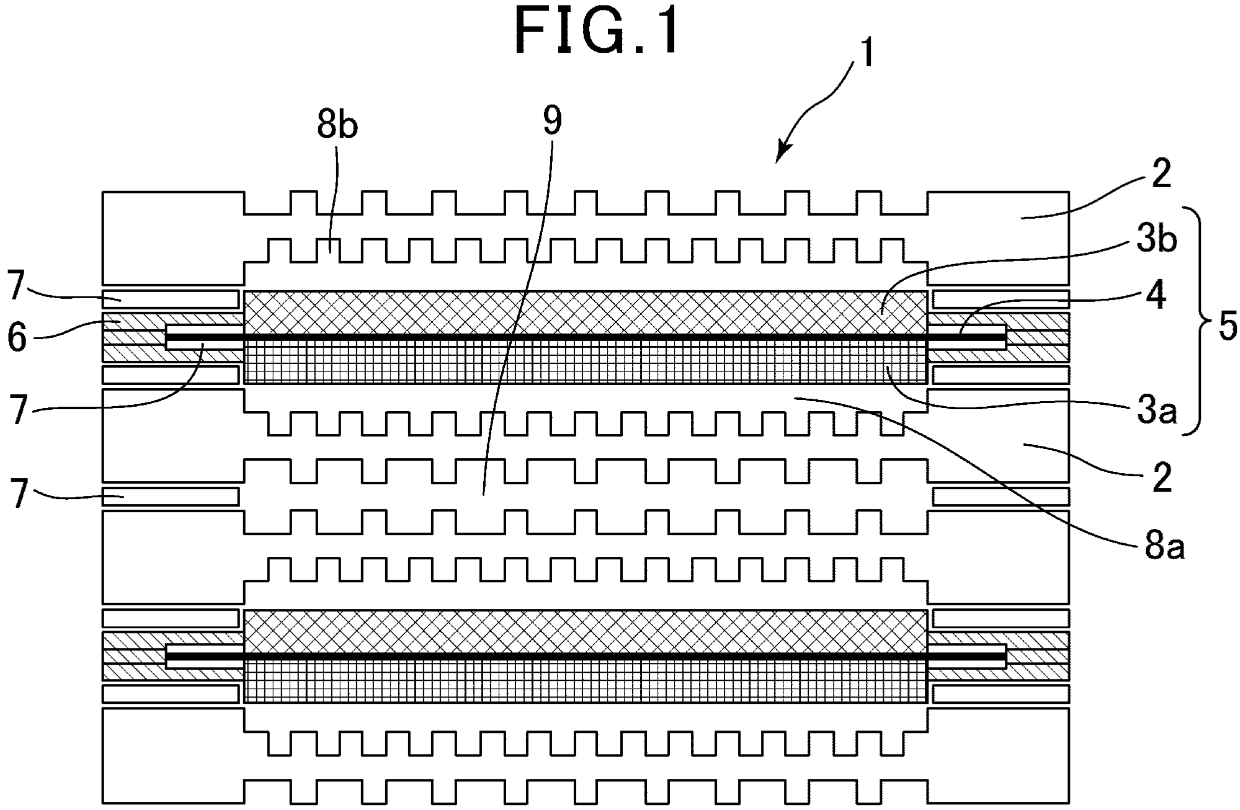


[Fig. 2]

FIG.2

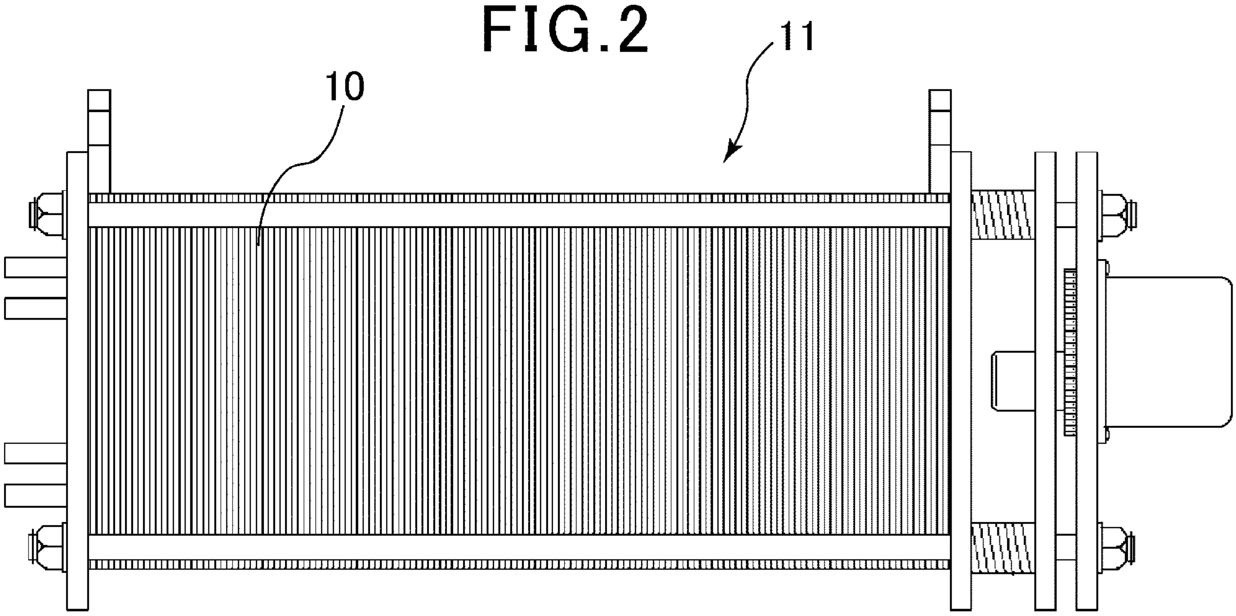

**INTERNATIONAL SEARCH REPORT**

International application No.
PCT/JP2019/040982

A. CLASSIFICATION OF SUBJECT MATTER
Int.Cl. C08F290/04(2006.01)i, H01M8/0284(2016.01)i, H01M8/10(2016.01)i

According to International Patent Classification (IPC) or to both national classification and IPC

B. FIELDS SEARCHED

Minimum documentation searched (classification system followed by classification symbols)
Int.Cl. C08F290/04, H01M8/0284, H01M8/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 08-169922 A (ROEHM GMBH) 02 July 1996, claims 1-2, paragraphs [0016]-[0040], [0059]-[0116], examples 4-8, 10-12 & US 5597871 A, claims 1-7, page 4, left column, line 7 to page 5, left column, line 58, page 7, left column, line 28 to page 12, table 2, examples 4-8, 10-12 & EP 699694 A2 & DE 4431302 A1 | 1, 3-4, 10<br>2, 5-9, 11-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27.11.2019 | 10.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/040982

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2016/024618 A1 (MITSUBISHI PLASTICS INC.) 18 February 2016, paragraph [0115], comparative example 4<br>& US 2017/0198175 A1, paragraph [0233], comparative example 4 & KR 10-2017-0008804 A & CN 106459695 A | 1, 3-5, 10<br>2, 6-9, 11-15 |
| X<br>Y<br>A | WO 2018/190415 A1 (THREE BOND CO., LTD.) 18 October 2018, claims 1-17, paragraphs [0009], [0027], [0069]-[0099], examples 1-3, 6, 7<br>(Family: none) | 1-4, 6-15<br>7-9, 11-15<br>5 |
| X<br>Y | JP 2013-216782 A (KANEKA CORPORATION) 24 October 2013, claims 1-2, 4, 19, paragraphs [0017], [0098], [0113]-[0116], [0124]<br>(Family: none) | 1-6, 10<br>7-9, 11-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111146 A
- JP 2004075824 A
- US 20050043480 A1
- JP 2007100099 A
- JP 2013229323 A
- JP H0288614 B
- EP 0353471 A2
- JP H0288614 A
- JP 2013216782 A
- JP 2018240570 A


### Non-patent literature cited in the description


- **T.P. LIAO ; J.P. KENNEDY.** *Polymer Bulletin,* 1981, vol. 6, 135-141
- **PUSKAS.** *Polymer Bulletin,* 1988, vol. 20, 253-260